# EUROPÄISCHE PATENTSCHRIFT

(11) **EP 3 945 768 B1**
(45) Veröffentlichungstag und Bekanntmachung des Hinweises auf die Patenterteilung: **13.05.2026**
(21) Anmeldenummer: 20710901.8
(22) Anmeldetag: 11.03.2020
(51) Int. Cl.: A01C 7/08

(54) **VERSORGUNGSAGGREGAT FÜR EINE PNEUMATISCHE KORNVEREINZELUNGSEINRICHTUNG**
SUPPLY ASSEMBLY FOR A PNEUMATIC GRAIN SEPARATOR DEVICE
UNITÉ D'ALIMENTATION DESTINÉE À UN DISPOSITIF PNEUMATIQUE D'INDIVIDUALISATION DE GRAINS

(30) Priorität: 29.03.2019 DE 102019108238
(43) Veröffentlichungstag der Anmeldung: 09.02.2022
(73) Patentinhaber: Amazonen-Werke H. Dreyer SE & Co. KG, 49205 Hasbergen (DE)
(72) Erfinder: LUEBBEN, Jan-Eike, 26188 Edewecht (DE); FLUCKE, Jan, 27798 Hude (DE); WIEN, Thomas, 28816 Stuhr (DE)
(86) Internationale Anmeldenummer: PCT/EP2020/056442
(87) Internationale Veröffentlichungsnummer: WO 2020/200672

(56) Entgegenhaltungen:
- WO-A1-2013/180619
- WO-A1-2013/180620
- AU-B2- 2010 200 082
- US-A1- 2010 313 800

## Beschreibung

Die Erfindung betrifft ein Versorgungsaggregat für eine pneumatische Kornvereinzelungseinrichtung nach dem Oberbegriff des Patentanspruchs 1, ein Versorgungssystem für zumindest zwei pneumatische Kornvereinzelungseinrichtungen nach dem Oberbegriff des Patentanspruchs 11 und eine Sämaschine nach dem Oberbegriff des Patentanspruchs 13.

Sämaschinen mit einer pneumatischen Kornvereinzelung weisen regelmäßig mehrere pneumatisch betriebene Kornvereinzelungseinrichtungen auf, welche Körner aus einem körnigen Material unter Verwendung einer mittels einer Versorgungsluftströmung erzeugten Druckdifferenz vereinzeln. Das körnige Material und die Versorgungsluftströmung wird den Kornvereinzelungseinrichtungen von einem Versorgungssystem mit mehreren Versorgungsaggregaten bereitgestellt, wobei jeder Kornvereinzelungseinrichtung üblicherweise ein Versorgungsaggregat zugeordnet ist. Die durch die Kornvereinzelungseinrichtungen vereinzelten Körner werden dann über Säschare der Sämaschine auf eine landwirtschaftliche Nutzfläche abgelegt.

Gattungsgemäße Versorgungsaggregate weisen üblicherweise ein Aggregatsgehäuse auf, wobei das Aggregatsgehäuse einen Abscheidebereich umfasst, in welchen eine mit Saatgut beladene Einspeiseluftströmung einleitbar ist, gezeigt beispielsweise in der US 2010 0 313 800 A1. Über eine in dem Abscheidebereich angeordnete Abscheideeinrichtung wird das Saatgut aus der Einspeiseluftströmung abgeschieden, sodass sich im Bereich der Abscheideeinrichtung Saatgut ansammelt, welches dann zur Vereinzelung der Kornvereinzelungseinrichtung zugeleitet wird. Bei einigen Aggregatskonstruktionen ist innerhalb des Aggregatsgehäuses eine Einleiteinrichtung angeordnet, über welche die Einspeiseluftströmung nach dem Abscheiden des Saatguts in eine Versorgungsluftströmung für die Kornvereinzelungseinrichtung einleitbar ist, wie es die WO 2013 180 620 A1 zeigt. Ein ähnliches Versorgungsaggregat ist in der WO 2013 180 619 A1 gezeigt. Entsprechende Systeme kommen insbesondere bei der Überdruckvereinzelung zum Einsatz. Die Versorgungsluftströmung wird dann der Kornvereinzelungseinrichtung zugeleitet,
welche dann auf Grundlage einer mittels der Versorgungsluftströmung erzeugten Druckdifferenz die Kornvereinzelung vornimmt.

Bei gattungsgemäßen Versorgungsaggregaten sammelt sich im Betrieb das aus der Einspeiseluftströmung abgeschiedene Saatgut im Abscheidebereich des Aggregatsgehäuses oder der Zuleitung zum Abscheidebereich an, wodurch es zur Entwicklung eines Staudrucks im Abscheidebereich oder dessen Zuleitung kommen kann. Aufgrund des Staudrucks können bei Systemen, bei welchen die Einspeiseluftströmung nach dem Abscheiden des Saatguts nicht separat aus dem Aggregatsgehäuse ausgeleitet wird, Druckschwankungen in der der Kornvereinzelungseinrichtung zugeleiteten Versorgungsluftströmung entstehen. Aufgrund der Druckschwankungen kann der Betrieb der Kornvereinzelungseinrichtung erheblich beeinträchtigt werden, sodass sogar Fehlstellen oder Saatreihenunterbrechungen bei der Aussaat entstehen können. Die der Erfindung zugrundeliegende Aufgabe besteht somit darin, Druckschwankungen in der Versorgungsluftströmung einer pneumatischen Kornvereinzelungseinrichtung zu vermeiden oder zumindest zu reduzieren.

Die Aufgabe wird gelöst durch ein Versorgungsaggregat mit den Merkmalen des Anspruchs 1.

Die Erfindung macht sich die Erkenntnis zunutze, dass durch die Verwendung eines Strömungsteilers Druckschwankungen in der der Kornvereinzelungseinrichtung zugeleiteten Versorgungsluftströmung effektiv vermieden oder zumindest erheblich verringert werden. Abhängig von dem Füllstand von körnigem Material in dem Abscheidebereich und somit abhängig von dem durch die Kornaufstauung verursachten Staudruck, kommt es durch den Strömungsteiler zu einer selbstregulierenden Aufteilung der Transportluftströmung in die zwei Einspeiseluftströmungen. Die selbstregulierenden Eigenschaften hängen dabei von der Ausgestaltung des Strömungsteilers ab. Der Strömungsteiler ist derart ausgebildet, dass eine erste Einspeiseluftströmung einen ersten Anteil des körnigen Materials der Transportluftströmung und eine zweite Einspeiseluftströmung zunächst einen zweiten Anteil des körnigen Materials der Transportluftströmung umfasst. Beispielsweise kann der Strömungsteiler derart ausgebildet sein, dass eine erste Einspeiseluftströmung zunächst 90% des körnigen Materials der Transportluftströmung und eine zweite Einspeiseluftströmung zunächst die übrigen 10% des körnigen Materials der Transportluftströmung umfasst. Mit zunehmendem Staudruck in dem Strömungspfad der ersten Einspeiseluftströmung, welcher durch eine Kornaufstauung in dem Abscheidebereich hervorgerufen wird, erhöht sich der Anteil des körnigen Materials, welcher auf die zweite Einspeiseluftströmung entfällt. Gleichzeitig verringert sich mit zunehmendem Staudruck in dem Strömungspfad der ersten Einspeiseluftströmung der Anteil des körnigen Materials, welcher auf die erste Einspeiseluftströmung entfällt. Der Strömungsteiler veranlasst somit eine staudruckabhängige und sich selbst regulierende Umleitung des körnigen Materials.

Die zweite Einspeiseluftströmung, welche nicht dem Versorgungsaggregat zugeleitet wird, an welchem der Strömungsteiler angeordnet ist, kann dann einem anderen Versorgungsaggregat für eine weitere pneumatische Kornvereinzelungseinrichtung der landwirtschaftlichen Sämaschine zugeleitet werden. Ein Aufstauen von körnigem Material in der Zuleitung und somit die Entwicklung eines übermäßigen Staudrucks, welcher zum Erliegen der Einspeiseluftströmungen führen würde, wird somit vermieden. Der Strömungsteiler vermeidet somit das Zusammenbrechen des Förderdrucks in der Zuleitung zu dem Versorgungsaggregat, wenn das körnige Material in dem Abscheidebereich eine kritische Füllstandsgrenze überschritten hat. Somit werden auch Druckschwankungen in der Versorgungsluft für die Kornvereinzelungseinrichtung erheblich reduziert, da ein durch einen Kornstau in der Zuleitung zu dem Versorgungsaggregat verursachter Strömungsabfall der Einspeiseluftströmung verhindert oder zumindest vermindert wird.

Die Einleiteinrichtung, über welche die Einspeiseluftströmung nach dem Abscheiden des körnigen Materials in die Versorgungsluftströmung für die Kornvereinzelungseinrichtung einleitbar ist, kann eine offene Düsenkonstruktion umfassen. Durch die Düsenkonstruktion wird ein Unterdruck im Abscheidebereich innerhalb des Aggregatsgehäuses erzeugt. Dadurch, dass der Abscheidebereich in einem lokalen Unterdruckbereich des Aggregatsgehäuses angeordnet ist, wird der Korntransport nochmals gefördert. Die pneumatische Kornvereinzelungseinrichtung, welcher die Versorgungsluftströmung bereitgestellt wird, arbeitet vorzugsweise nach dem Prinzip der Überdruckvereinzelung.

In einer bevorzugten Ausführungsform des erfindungsgemäßen Versorgungsaggregats ist der Strömungsteiler zumindest teilweise außerhalb des Aggregatsgehäuses angeordnet und/oder dazu eingerichtet, die mit körnigem Material beladene Transportluftströmung außerhalb des Aggregatsgehäuses in die zwei Einspeiseluftströmungen zu teilen. Das Aggregatsgehäuse umfasst vorzugsweise eine Einspeiseöffnung, durch welche die mit körnigem Material beladene Einspeiseluftströmung in den Abscheidebereich des Aggregatsgehäuses einleitbar ist. Der Strömungsteiler ist vorzugsweise dazu eingerichtet, die Einspeiseluftströmung dem Abscheidebereich durch die Einspeiseöffnung des Aggregatsgehäuses zuzuleiten. Der Strömungsteiler kann ein einstückiges Teil, insbesondere ein einstückiges Kunststoffteil, sein, welches in die Einspeiseöffnung des Aggregatsgehäuses einsetzbar ist. Der Strömungsteiler kann auch teilweise oder vollständig innerhalb des Aggregatsgehäuses angeordnet sein oder zumindest teilweise in dem Aggregatsgehäuse integriert sein.

In einer weiteren bevorzugten Ausführungsform des erfindungsgemäßen Versorgungsaggregats weist der Strömungsteiler einen Einlassströmungskanal für die Transportluftströmung auf, welcher sich an einem Abzweigungspunkt oder einem Abzweigungsbereich in zwei Auslassströmungskanäle für die Einspeiseluftströmungen aufteilt. Der Einlassströmungskanal und die zwei Auslassströmungskanäle bilden vorzugsweise eine Y-förmige Grundform aus. Vorzugsweise treffen sich die Längsachsen des Einlassströmungskanals und der Auslassströmungskanäle in dem Abzweigungspunkt oder dem Abzweigungsbereich des Strömungsteilers. Alternativ kann der Strömungsteiler auch zwei voneinander beabstandete Abzweigungspunkte oder Abzweigungsbereiche aufweisen, wobei jedem Abzweigungspunkt oder jedem Abzweigungsbereich ein Auslassströmungskanal zugeordnet ist.

Darüber hinaus ist ein erfindungsgemäßes Versorgungsaggregat vorteilhaft, bei welchem ein erster Auslassströmungskanal in den Abscheidebereich des Aggregatsgehäuses hineinragt und/oder ein zweiter Auslassströmungskanal von dem Aggregatsgehäuse weg oder aus dem Aggregatsgehäuse heraus führt. Der zweite Auslassströmungskanal kann im Wesentlichen spiegelsymmetrisch zu dem Einlassströmungskanal verlaufen. Alternativ können der zweite Auslassströmungskanal und der Einlassströmungskanal asymmetrisch zueinander angeordnet sein. Der Winkelbetrag zwischen der Längsachse des ersten Auslassströmungskanals und der Längsachse des Einlassströmungskanals und der Winkelbetrag zwischen der Längsachse des ersten Auslassströmungskanals und der Längsachse des zweiten Auslassströmungskanals können übereinstimmen. Alternativ kann der Winkelbetrag zwischen der Längsachse des ersten Auslassströmungskanals und der Längsachse des Einlassströmungskanals von dem Winkelbetrag zwischen der Längsachse des ersten Auslassströmungskanals und der Längsachse des zweiten Auslassströmungskanals abweichen. Zwischen dem zweiten Auslassströmungskanal und dem Einlassströmungskanal liegt vorzugsweise ein Spreizwinkel im Bereich zwischen 5 Grad und 180 Grad. Der optimale Spreizwinkel ist abhängig von den Eigenschaften des körnigen Materials, insbesondere von der Packungsdichte des körnigen Materials. Insbesondere kann der Spreizwinkel in einem Bereich zwischen 80 Grad und 150 Grad liegen, wobei ein Spreizwinkel im Bereich zwischen 90 Grad und 130 Grad oder ein Spreizwinkel im Bereich zwischen 100 Grad und 120 Grad besonders bevorzugt sein kann. Beispielsweise liegt der Spreizwinkel bei etwa 110 Grad. Der Spreizwinkel beschreibt somit die Ausrichtung der oberen Schenkel der Y-Form zueinander. Unterschiedliche körnige Materialien erfordern unterschiedliche Spreizwinkel. Somit ist beispielsweise zum Aufteilen von Maiskörnern ein anderer Spreizwinkel bevorzugt als zum Aufteilen von Rapskörnern. Insofern kann es sinnvoll sein, das Versorgungsaggregat mit einem anderen Strömungsteiler auszustatten, welcher auf das auszusäende körnige Material abgestimmt ist. Benutzer entsprechender Sämaschinen können beispielsweise Austauschkits verwenden, wobei die Austauschkits eine Mehrzahl von abweichenden Strömungsteilern umfassen. Die Austauschkits können außerdem eine Mehrzahl von Kornsammelkörpern umfassen, welche innerhalb des Abscheidebereichs anzuordnen sind, wobei die Konstruktion der Kornsammelkörper auf die Eigenschaften des körnigen Materials abgestimmt ist. Es kann beispielsweise Austauschkits für grobkörniges und Austauschkits für feinkörniges Material geben.

In einer weiteren bevorzugten Ausführungsform des erfindungsgemäßen Versorgungsaggregats weist der erste Auslassströmungskanal eine Kanallänge auf, welche kleiner als das Zweifache des Durchmessers des Einlassströmungskanals ist oder welche im Wesentlichen dem Durchmesser des Einlassströmungskanals entspricht. Der Durchmesser des ersten Auslassströmungskanals liegt vorzugsweise im Bereich zwischen dem 0,8-fachen und dem 1,2-fachen des Durchmessers des Einlassströmungskanals. Der erste Auslassströmungskanal weist vorzugsweise eine Kanallänge von weniger als 10 cm, vorzugsweise weniger als 5 cm, besonders bevorzugt weniger als 2,5 cm, auf. Das aufgestaute körnige Material weist eine spezifische Schüttdichte auf, welche bei steigender Stauhöhe zu einer verstärkten Abdichtung führt. Die Kanallänge des ersten Auslassströmungskanals hat somit einen erheblichen Einfluss auf das Ausmaß der durch die Kornaufstauung verursachten Abdichtung und beeinflusst somit die sich ergebende Druckschwankung an der Kornvereinzelungseinrichtung, welche durch eine Kornaufstauung verursacht wird.

In einer weiteren bevorzugten Ausführungsform des erfindungsgemäßen Versorgungsaggregats ist der Durchmesser des Einlassströmungskanals größer als der Durchmesser des ersten Auslassströmungskanals und/oder größer als der Durchmesser des zweiten Auslassströmungskanals. Alternativ entspricht der Durchmesser des Einlassströmungskanals dem Durchmesser des ersten Auslassströmungskanals und/oder dem Durchmesser des zweiten Auslassströmungskanals. Wenn der Durchmesser des Einlassströmungskanals größer als der Durchmesser des ersten Auslassströmungskanals und/oder größer als der Durchmesser des zweiten Auslassströmungskanals ist, wird die Aufteilung der Transportluftströmung in zwei Einspeiseluftströmungen unterstützt.

Somit kann ein Druckabfall aufgrund der Strömungsaufteilung hinter dem Abzweigungspunkt oder dem Abzweigungsbereich des Strömungsteilers effektiv vermieden werden.

Erfindungsgemäß weist das Versorgungsaggregat einen Durchleitungskanal innerhalb des Aggregatsgehäuses auf, über welchen die Versorgungsluftströmung durch das Versorgungsaggregat durchleitbar ist. Das Aggregatsgehäuse umfasst vorzugsweise einen Versorgungslufteinlass, durch welchen eine Versorgungsluftströmung in das Aggregatsgehäuse einleitbar ist. Ferner umfasst das Aggregatsgehäuse vorzugsweise ein Versorgungsluftauslass, durch welchen die Einspeiseluftströmung nach dem Abscheiden des körnigen Materials und die Versorgungsluftströmung gemeinsam aus dem Aggregatsgehäuse ausleitbar sind. Der Durchleitungskanal erstreckt sich vorzugsweise zwischen dem Versorgungslufteinlass und dem Versorgungsluftauslass des Aggregatsgehäuses.

Darüber hinaus ist ein erfindungsgemäßes Versorgungsaggregat bevorzugt, bei welchem der Durchleitungskanal die Einleiteinrichtung umfasst und vor und/oder hinter der Einleiteinrichtung Kanalsegmente aufweist, deren Durchmesser größer sind als der Durchmesser des Einlassströmungskanals des Strömungsteilers. Erfindungsgemäß ist der Durchleitungskanal mit einem Bypass-Kanal verbunden, welcher ein vor der Einleiteinrichtung angeordnetes Kanalsegment des Durchleitkanals mit einem hinter der Einleiteinrichtung angeordneten Kanalsegment des Durchleitkanals verbindet. Innerhalb des Bypass-Kanals kann eine Durchflusssteuereinrichtung angeordnet sein, über welche der Bypass-Kanal teilweise oder vollständig gesperrt und/oder freigegeben werden kann. Über die Durchflusssteuereinrichtung kann beispielsweise der freie Strömungsquerschnitt innerhalb des Bypass-Kanals verändert werden.

In einer anderen bevorzugten Ausführungsform des erfindungsgemäßen Versorgungsaggregats weist die Abscheideeinrichtung einen Kornsammelkörper auf, innerhalb welchem sich das aus der Einspeiseluftströmung abgeschiedene körnige Material sammelt, wobei der Kornsammelkörper eine oder mehrere Entlüftungsöffnungen für die Einspeiseluftströmung aufweist. Der Kornsammelkörper ist vorzugsweise zerstörungsfrei aus dem Aggregatsgehäuse des Versorgungsaggregats entnehmbar. Der Kornsammelkörper kann beispielsweise eine Trichter- oder Becherform aufweisen. Die Entlüftungsöffnungen können als Entlüftungsschlitze ausgebildet sein, welche sich über eine Mantelfläche des Kornsammelkörpers erstrecken. Die Entlüftungsöffnungen bilden vorzugsweise eine Siebfläche aus, durch welche Luft hindurchtreten kann. Die freie Siebfläche, an welcher kein körniges Material anliegt, fungiert als Entlüftungsfläche und ist entscheidend für die Aufrechterhaltung eines geeigneten Förderdrucks. Die erforderliche freie Siebfläche zur Aufrechterhaltung eines geeigneten Förderdrucks ist von den Eigenschaften des körnigen Materials abhängig, insbesondere von dessen Packungsdichte. Beispielsweise benötigen Maiskörner aufgrund der geringeren Packungsdichte eine andere freie Entlüftungsfläche als beispielsweise Rapskörner, um einen geeigneten Förderdruck aufrecht erhalten zu können. Der Kornsammelkörper ist vorzugsweise in dem Abscheidebereich des Aggregatsgehäuses angeordnet. Der Abscheidebereich innerhalb des Aggregatsgehäuses ist vorzugsweise ein Unterdruckbereich.

In einer anderen Ausführungsform des erfindungsgemäßen Versorgungsaggregats weist der Kornsammelkörper einen Füllbereich für das aus der Einspeiseluftströmung abgeschiedene körnige Material auf, wobei der Füllbereich eine maximale Füllhöhe definiert, wobei die Summe aus der Hälfte der maximalen Füllhöhe und dem aus dem Aggregatsgehäuse herausragenden Teil des ersten Auslassströmungskanals des Strömungsteilers kleiner ist als das Vierfache des Durchmessers des Einlassströmungskanals des Strömungsteilers. Untersuchungen haben gezeigt, dass der Aufbau eines unvorteilhaften Staudrucks mit den beschriebenen Größenrelationen besonders effektiv vermieden werden kann.

Die der Erfindung zugrundeliegende Aufgabe wird ferner durch ein Versorgungssystem der eingangs genannten Art gelöst, wobei das erste Versorgungsaggregat des erfindungsgemäßen Versorgungssystems nach einer der vorstehend beschriebenen Ausführungsformen ausgebildet ist und der Strömungsteiler des ersten Versorgungsaggregats dazu eingerichtet ist, eine Einspeiseströmung dem Abscheidebereich des ersten Versorgungsaggregats zuzuleiten und eine andere Einspeiseströmung einem Abscheidebereich des zweiten Versorgungsaggregats zuzuleiten. Hinsichtlich der Vorteile und Modifikationen des erfindungsgemäßen Versorgungssystems wird zunächst auf die Vorteile und Modifikationen des erfindungsgemäßen Versorgungsaggregats verwiesen.

Zwischen dem Strömungsteiler des ersten Versorgungsaggregats und dem Abscheidebereich des zweiten Versorgungsaggregats kann ein Versorgungsschlauch angeordnet sein, über welchen eine mit körnigem Material beladene Einspeiseluftströmung dem Abscheidebereich des zweiten Versorgungsaggregats zugeleitet wird.

In einer bevorzugten Ausführungsform des erfindungsgemäßen Versorgungssystems ist das zweite Versorgungsaggregat mit Ausnahme des Strömungsteilers nach einer der vorstehend beschriebenen Ausführungsformen ausgebildet. Anstatt des Strömungsteilers kann das zweite Versorgungsaggregat einen Einspeisestutzen umfassen, welcher beispielsweise teilweise in den Abscheidebereich des zweiten Versorgungsaggregats hineinragen kann. Über den Einspeisestutzen wird die mit körnigem Material beladene Einspeiseluftströmung in den Abscheidebereich des zweiten Versorgungsaggregats eingeleitet.

Die der Erfindung zugrundeliegende Aufgabe wird ferner durch eine Sämaschine der eingangs genannten Art gelöst, wobei das Versorgungssystem der erfindungsgemäßen Sämaschine nach einer der vorstehend beschriebenen Ausführungsformen ausgebildet ist. Hinsichtlich der Vorteile und Modifikationen der erfindungsgemäßen Sämaschine wird zunächst auf die Vorteile und Modifikationen des erfindungsgemäßen Versorgungssystems und auf die Vorteile und Modifikationen des erfindungsgemäßen Versorgungsaggregats verwiesen.

Die pneumatischen Kornvereinzelungseinrichtungen der Sämaschine arbeiten vorzugsweise nach dem Prinzip der Überdruckvereinzelung. Die Kornvereinzelungseinrichtungen sowie deren Versorgungsaggregate sind vorzugsweise jeweils an einer Trägerstruktur befestigt, wobei die einzelnen Trägerstrukturen über ein Parallelogrammgestänge an einem sich quer zur Fahrtrichtung erstreckenden Maschinenrahmen befestigt sein können.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Versorgungsaggregats in einer perspektivischen Darstellung;
- Fig. 2: das in der Fig. 1 gezeigte Versorgungsaggregat in einer perspektivischen Schnittdarstellung; und
- Fig. 3: einen Strömungsteiler und einen Abschnitt eines Aggregatsgehäuses eines erfindungsgemäßen Versorgungsaggregats in einer Schnittdarstellung.

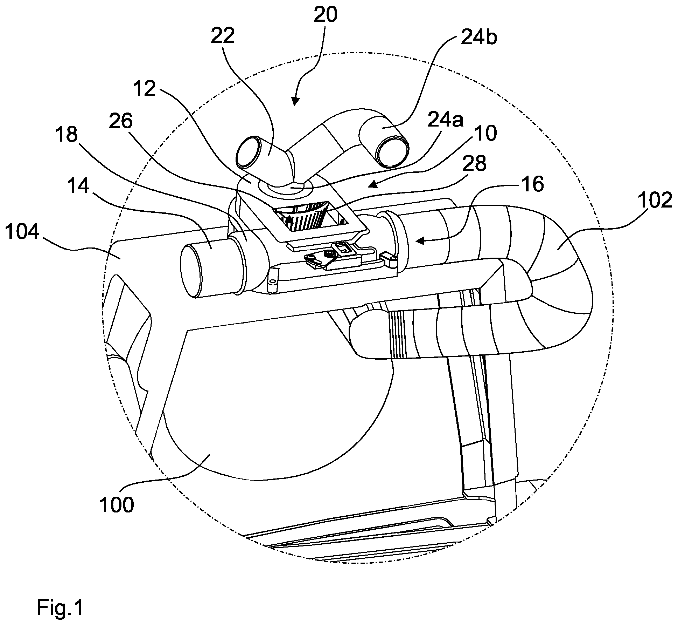

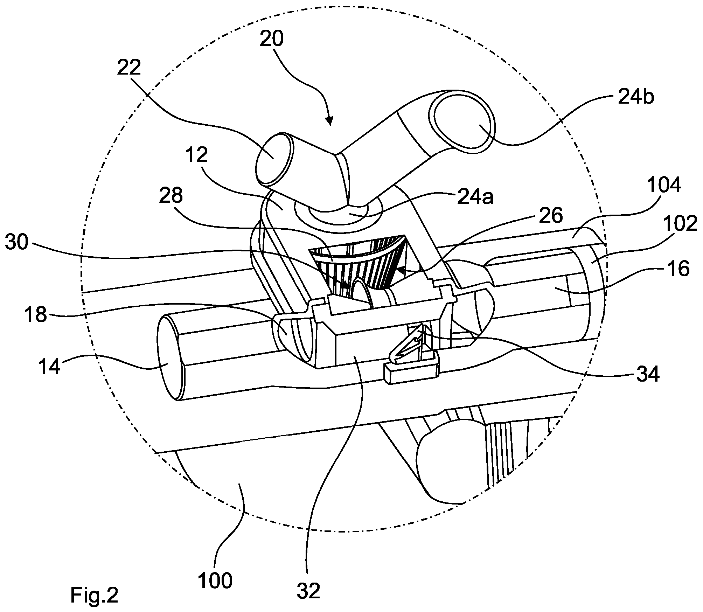

Die Fig. 1 und 2 zeigen ein Versorgungsaggregat 10 einer landwirtschaftlichen Sämaschine, wobei das Versorgungsaggregat 10 mit einer pneumatischen Kornvereinzelungseinrichtung 100 verbunden ist. Das Versorgungsaggregat 10 stellt der pneumatischen Kornvereinzelungseinrichtung 100 eine Versorgungsluftströmung und körniges Material M bereit. Die Bereitstellung der Versorgungsluftströmung erfolgt über die Versorgungsluftleitung 102 zwischen dem Versorgungsaggregat 10 und der pneumatischen Kornvereinzelungseinrichtung 100. Da das Versorgungsaggregat 10 unmittelbar oberhalb der pneumatischen Kornvereinzelungseinrichtung 100 angeordnet ist, kann eine direkte Durchleitung des körnigen Materials M erfolgen. Hierzu weist das Versorgungsaggregat 10 an seiner Unterseite eine Materialauslassöffnung auf, welche mit einer Materialeinlassöffnung der pneumatischen Kornvereinzelungseinrichtung 100 verbunden ist.

Die pneumatische Kornvereinzelungseinrichtung 100 vereinzelt die Körner des von dem Versorgungsaggregat 10 bereitgestellten körnigen Materials M. Hierzu verwendet die pneumatische Kornvereinzelungseinrichtung 100 eine mittels der über die Versorgungsluftleitung 102 von dem Versorgungsaggregat 10 bereitgestellte Versorgungsluftströmung erzeugte Druckdifferenz.

Die vereinzelten Körner werden dann einem Säschar zugeleitet, welches die vereinzelten Körner auf eine landwirtschaftliche Nutzfläche ablegt.

Das Versorgungsaggregat 10, die pneumatische Kornvereinzelungseinrichtung 100 und das nicht dargestellte Säschar sind an einer Trägerstruktur 104 angeordnet und befestigt. Die Trägerstruktur 104 ist über ein Parallelogrammgestänge mit einem Querbalken einer Rahmenstruktur der Sämaschine verbunden, wobei der Querbalken sich quer zur Fahrtrichtung der Sämaschine erstreckt. An dem Querbalken sind mehrere Säaggregate angeordnet, wobei jedes Säaggregat ein Versorgungsaggregat 10, eine Kornvereinzelungseinrichtung 100 und ein Säschar aufweist.

Das Versorgungsaggregat 10 weist ein Aggregatsgehäuse 12 auf, wobei das Aggregatsgehäuse 12 aus Kunststoff ausgebildet ist. Das Aggregatsgehäuse 12 weist einen Versorgungslufteinlass 14 auf, welcher über einen Durchleitungskanal 18 mit einem Versorgungsluftauslass 16 verbunden ist. Über den Durchleitungskanal 18 ist eine durch den Versorgungslufteinlass 14 in das Aggregatsgehäuse 12 eintretende Versorgungsluftströmung durch das Aggregatsgehäuse 12 durchleitbar, sodass die Versorgungsluftströmung durch den Versorgungsluftauslass 16 des Aggregatsgehäuses 12 in die Versorgungsluftleitung 102 eingeleitet wird.

Das Aggregatsgehäuse 12 weist an seine Oberseite eine Einspeiseöffnung auf, in welche ein als Y-Stück ausgebildeter Strömungsteiler 20 eingesetzt ist. Über den Strömungsteiler 20 und die Einspeiseöffnung des Aggregatsgehäuses 12 ist einem innenliegenden Abscheidebereich 26 des Aggregatsgehäuses 12 eine mit körnigem Material M beladene Einspeiseluftströmung zuführbar. Der Strömungsteiler 20 ist dabei teilweise außerhalb des Aggregatsgehäuses 12 angeordnet und ragt abschnittsweise in den Abscheidebereich 26 des Aggregatsgehäuses 12 hinein. Das Aggregatsgehäuse 12 ist aus Darstellungsgründen an seiner Oberseite geöffnet dargestellt, sodass der Innenbereich des Aggregatsgehäuses 12 teilweise sichtbar ist. Eine entsprechende Öffnung weist das tatsächliche Aggregatsgehäuse 12 nicht auf. Im Bereich der Öffnung kann jedoch beispielsweise ein Sichtfenster angeordnet sein, über welches der Innenbereich des Aggregatsgehäuses 12 optisch überprüfbar ist.

Der Strömungsteiler 20 ist dazu eingerichtet, eine mit körnigem Material M beladene Transportluftströmung in zwei Einspeiseluftströmungen zu teilen und eine Einspeiseluftströmung dem Abscheidebereich 26 des Aggregatsgehäuses 12 des dargestellten Versorgungsaggregats 10 zuzuleiten. Die andere Einspeiseluftströmung wird üblicherweise einem anderen Versorgungsaggregat für eine weitere pneumatische Kornvereinzelungseinrichtung der landwirtschaftlichen Sämaschine zugeleitet, welche Bestandteil eines benachbarten Säaggregats der Sämaschine ist. Über den Strömungsteiler 20 wird die mit körnigem Material M beladene Transportluftströmung außerhalb des Aggregatsgehäuses 12 in zwei Einspeiseluftströmungen geteilt. Hierzu weist der Strömungsteiler 20 einen Einlassströmungskanal 22 für die Transportluftströmung auf, welcher sich in zwei Auslassströmungskanäle 24a, 24b für die Einspeiseluftströmungen aufteilt. Der Einlassströmungskanal 22 und die zwei Auslassströmungskanäle 24a, 24b bilden eine Y-förmige Grundform aus. Der erste Auslassströmungskanal 24a ragt in den Abscheidebereich 26 des Aggregatsgehäuses 12 hinein. Der zweite Auslassströmungskanal 24b führt von dem Aggregatsgehäuse 12 weg.

In dem Abscheidebereich 26 ist eine einen Kornsammelkörper 28 umfassende Abscheideeinrichtung zum Abscheiden des körnigen Materials M aus der Einspeiseluftströmung angeordnet. Über eine in dem Aggregatsgehäuse angeordnete Einleiteinrichtung 30 ist die Einspeiseluftströmung nach dem Abscheiden des körnigen Materials M in die Versorgungsluftströmung für die Kornvereinzelungseinrichtung 100 einleitbar. Die Einleiteinrichtung 30 umfasst eine offene Düsenkonstruktion, über welche die Einspeiseluftströmung nach dem Abscheiden des körnigen Materials M angesaugt wird. Somit ergibt sich ein Unterdruck im Abscheidebereich 26 des Aggregatsgehäuses 12. Demnach ist der Kornsammelkörper 28 in einem Unterdruckbereich innerhalb des Aggregatsgehäuses 12 angeordnet. Aufgrund der Einleitung der Einspeiseluftströmung nach dem Abscheiden des körnigen Materials M in die Versorgungsluftströmung werden die Einspeiseluftströmung und die Versorgungsluftströmung gemeinsam durch den Versorgungsluftauslass 16 aus dem Aggregatsgehäuse 12 ausgeleitet.

Der Durchleitungskanal 18 ist außerdem mit einem Bypass-Kanal 32 verbunden, welcher ein vor der Einleiteinrichtung 30 angeordnetes Kanalsegment des Durchleitkanals 18 mit einem hinter der Einleiteinrichtung 30 angeordneten Kanalsegment des Durchleitkanals 18 verbindet. Innerhalb des Bypass-Kanals 32 ist eine als schwenkbare Klappe ausgebildete Durchflusssteuereinrichtung 34 angeordnet, über welche der Bypass-Kanal 32 teilweise oder vollständig gesperrt und freigegeben werden kann. Über die Durchflusssteuereinrichtung 34 kann der freie Strömungsquerschnitt innerhalb des Bypass-Kanals 32 verändert werden.

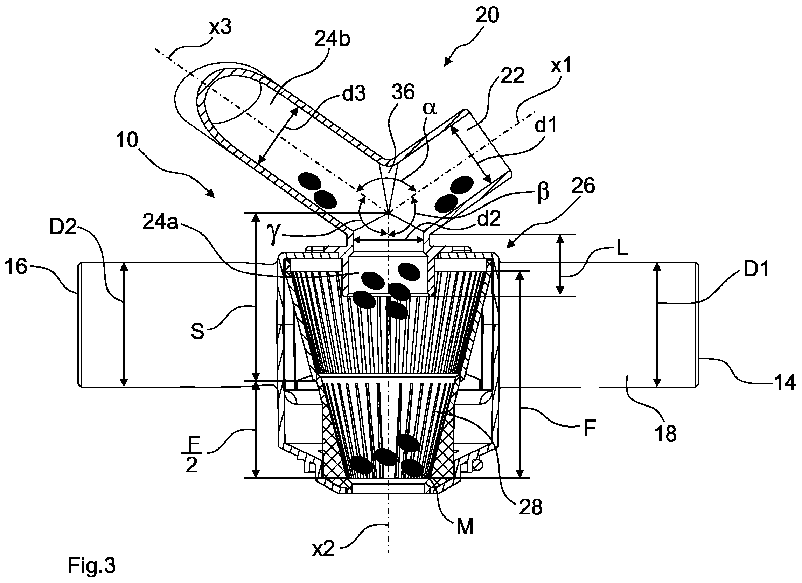

Die Fig. 3 zeigt eine bevorzugte Ausführungsform eines Versorgungsaggregats 10. Der Strömungsteiler 20 weist einen Einlassströmungskanal 22 für eine mit körnigem Material M beladene Transportluftströmung auf. In einem Abzweigungsbereich 36 teilt sich der Einlassströmungskanal 22 in zwei Auslassströmungskanäle 24a, 24b für Einspeiseluftströmungen, welche jeweils einem Abscheidebereich 26 eines Versorgungsaggregats 10 zuzuführen sind.

Der Einlassströmungskanal 22 weist eine Längsachse x1 auf. Der erste Auslassströmungskanal 24a weist eine Längsachse x2 auf. Der zweite Auslassströmungskanal 24b weist eine Längsachse x3 auf. Die Beträge der Winkel β, γ zwischen der Längsachse x2 des Auslassströmungskanals 24a und den Längsachsen x1, x3 des Einlassströmungskanals 22 und des zweiten Auslassströmungskanals 24b stimmen im dargestellten Ausführungsbeispiel überein, sodass sich eine spiegelsymmetrische Ausbildung des Y-förmigen Strömungsteilers 20 ergibt. In anderen Ausführungsformen können die Strömungskanäle 22, 24a, 24b des Strömungsteilers 20 auch asymmetrisch zueinander angeordnet sein. Der Spreizwinkel α zwischen dem Einlassströmungskanal 22 und dem zweiten Auslassströmungskanal 24 beträgt etwa 110 Grad. Zum Ausbringen unterschiedlicher körniger Materialien M können unterschiedliche Strömungsteiler 20 vorteilhaft sein, welche sich beispielsweise hinsichtlich der Winkel α, β, γ voneinander unterscheiden. Grundsätzlich kann der Spreizwinkel α im Bereich zwischen 5 Grad und 180 Grad liegen.

Der erste Auslassströmungskanal 24a weist eine Kanallänge L auf, welche kleiner ist als das Zweifache des Durchmessers d1 des Einlassströmungskanals 22. In einer anderen Ausführungsform kann die Kanallänge L des ersten Auslassströmungskanals 24 auch im Wesentlichen dem Durchmesser d1 des Einlassströmungskanals 22 entsprechen. Der Durchmesser d2 des ersten Auslassströmungskanals 24a liegt im Bereich zwischen dem 0,8-fachen und dem 1,2-fachen des Durchmessers d1 des Einlassströmungskanals 22. Der erste Auslassströmungskanal 24a kann beispielsweise eine Kanallänge L von weniger als 10 cm aufweisen. Der Durchmesser d1 des Einlassströmungskanals 22 ist größer als der Durchmesser d2 des ersten Auslassströmungskanals 24a und größer als der Durchmesser d3 des zweiten Auslassströmungskanals 24b.

Der Durchleitungskanal 18 weist vor und hinter der Einleiteinrichtung 30 Kanalsegmente auf, deren Durchmesser D1, D2 größer sind als der Durchmesser d1 des Einlassströmungskanals 22 des Strömungsteilers 20.

Der Kornsammelkörper 28 der Abscheideeinrichtung, innerhalb welchem sich das aus der Einspeiseluftströmung abgeschiedene körnige Material M sammelt, ist im Wesentlichen trichterförmig ausgebildet. Der Kornsammelkörper 28 weist mehrere Entlüftungsöffnungen für die Einspeiseluftströmung auf, wobei die Entlüftungsöffnungen eine siebartige Mantelfläche ausbilden. Durch die Entlüftungsöffnungen der umlaufenden Siebfläche kann Luft hindurchtreten. Der Kornsammelkörper 28 weist einen Füllbereich für das aus der Einspeiseluftströmung abgeschiedene körnige Material M auf, wobei der Füllbereich eine maximale Füllhöhe F definiert, wobei die Summe S aus der Hälfte der maximalen Füllhöhe F und dem aus dem Aggregatsgehäuse 12 herausragenden Teil des ersten Auslassströmungskanals 24a des Strömungsteilers 20 kleiner ist als das Vierfache des Durchmessers d1 des Einlassströmungskanals 22 des Strömungsteilers 20.

Die Einspeiseluftströmung, welche den Strömungsteiler 20 durch den zweiten Auslassströmungskanal 24b verlässt, wird über einen Versorgungsschlauch einem zweiten Versorgungsaggregat zugeführt. Das zweite Versorgungsaggregat entspricht vorzugsweise mit Ausnahme des Strömungsteilers 20 dem abgebildeten Versorgungsaggregat 10. Anstatt des Strömungsteilers 20 kann das zweite Versorgungsaggregat einen Einspeisestutzen aufweisen, über welchen die mit körnigem Material beladene Einspeiseluftströmung in den Abscheidebereich des zweiten Versorgungsaggregats eingeleitet wird.

### Bezugszeichenliste

- 10: Versorgungsaggregat
- 12: Aggregatsgehäuse
- 14: Versorgungslufteinlass
- 16: Versorgungsluftauslass
- 18: Durchleitungskanal
- 20: Strömungsteiler
- 22: Einlassströmungskanal
- 24a, 24b: Auslassströmungskanäle
- 26: Abscheidebereich
- 28: Kornsammelkörper
- 30: Einleiteinrichtung
- 32: Bypass-Kanal
- 34: Durchflusssteuereinrichtung
- 36: Abzweigungsbereich

- 100: Kornvereinzelungseinrichtung
- 102: Versorgungsluftleitung
- 104: Trägerstruktur

- d1-d3: Durchmesser
- D1, D2: Durchmesser
- F: maximale Füllhöhe
- L: Kanallänge
- M: körniges Material
- S: Summe
- x1-x3: Längsachsen

- α, β, γ: Winkel

## Patentansprüche

1. Versorgungsaggregat (10) für eine pneumatische Kornvereinzelungseinrichtung (100) einer landwirtschaftlichen Sämaschine, mit
- einem Aggregatsgehäuse (12), welches einen Abscheidebereich (26) aufweist, in welchen eine mit körnigem Material (M) beladene Einspeiseluftströmung einleitbar ist;
- einer in dem Abscheidebereich (26) angeordneten Abscheideeinrichtung zum Abscheiden des körnigen Materials (M) aus der Einspeiseluftströmung,
- einer in dem Aggregatsgehäuse (12) angeordneten Einleiteinrichtung (30), über welche die Einspeiseluftströmung nach dem Abscheiden des körnigen Materials (M) in eine Versorgungsluftströmung für die Kornvereinzelungseinrichtung (100) einleitbar ist; und
- einem Durchleitungskanal (18) innerhalb des Aggregatsgehäuses (12), über welchen die Versorgungsluftströmung durch das Aggregatsgehäuse (12) durchleitbar ist;
**gekennzeichnet durch** einen Strömungsteiler (20), welcher dazu eingerichtet ist, eine mit körnigem Material (M) beladene Transportluftströmung in zwei Einspeiseluftströmungen zu teilen und eine Einspeiseluftströmung dem Abscheidebereich (26) des Aggregatsgehäuses (12) zuzuleiten, wobei der Durchleitungskanal (18) mit einem Bypass-Kanal (32) verbunden ist, welcher ein vor der Einleiteinrichtung (30) angeordnetes Kanalsegment des Durchleitkanals (18) mit einem hinter der Einleiteinrichtung (30) angeordneten Kanalsegment des Durchleitkanals (18) verbindet.

2. Versorgungsaggregat (10) nach Anspruch 1,
**dadurch gekennzeichnet, dass** der Strömungsteiler (20) zumindest teilweise außerhalb des Aggregatsgehäuses (12) angeordnet und/oder dazu eingerichtet ist, die mit körnigem Material (M) beladene Transportluftströmung außerhalb des Aggregatsgehäuses (12) in die zwei Einspeiseluftströmungen zu teilen.

3. Versorgungsaggregat (10) nach Anspruch 1 oder 2,
**dadurch gekennzeichnet, dass** der Strömungsteiler (20) einen Einlassströmungskanal (22) für die Transportluftströmung aufweist, welcher sich an einem Abzweigungspunkt oder einem Abzweigungsbereich (36) in zwei Auslassströmungskanäle (24a, 24b) für die Einspeiseluftströmungen aufteilt, wobei der Einlassströmungskanal (22) und die zwei Auslassströmungskanäle (24a, 24b) vorzugsweise eine Y-förmige Grundform ausbilden.

4. Versorgungsaggregat (10) nach Anspruch 3,
**dadurch gekennzeichnet, dass** ein erster Auslassströmungskanal (24a) in den Abscheidebereich (26) des Aggregatsgehäuses (12) hineinragt und/oder ein zweiter Auslassströmungskanal (24b) von dem Aggregatsgehäuse (12) weg oder aus dem Aggregatsgehäuse (12) heraus führt, wobei insbesondere der zweite Auslassströmungskanal (24b) im Wesentlichen spiegelsymmetrisch zu dem Einlassströmungskanal (22) verläuft.

5. Versorgungsaggregat (10) nach Anspruch 4,
**dadurch gekennzeichnet, dass** der erste Auslassströmungskanal (24a) eine Kanallänge (L) aufweist, welche kleiner ist als das Zweifache des Durchmessers (d1) des Einlassströmungskanals (22) oder welche im Wesentlichen dem Durchmesser (d1) des Einlassströmungskanals (22) entspricht.

6. Versorgungsaggregat (10) nach Anspruch 4 oder 5,
**dadurch gekennzeichnet, dass** der Durchmesser (d1) des Einlassströmungskanals (22) größer als der Durchmesser (d2) des ersten Auslassströmungskanals (24a) und/oder größer als der Durchmesser (d3) des zweiten Auslassströmungskanals (24b) ist oder dem Durchmesser (d2) des ersten Auslassströmungskanals (24a) und/oder dem Durchmesser (d3) des zweiten Auslassströmungskanals (24b) entspricht.

7. Versorgungsaggregat (10) nach einem der vorstehenden Ansprüche, **dadurch gekennzeichnet, dass** der Durchleitungskanal (18) die Einleiteinrichtung (30) umfasst und vor und/oder hinter der Einleiteinrichtung (30) Kanalsegmente aufweist, deren Durchmesser (D1, D2) größer sind als der Durchmesser (d1) des Einlassströmungskanals (22) des Strömungsteilers (20).

8. Versorgungsaggregat (10) nach einem der vorstehenden Ansprüche, **dadurch gekennzeichnet, dass** innerhalb des Bypass-Kanals (32) eine Durchflusssteuereinrichtung (34) angeordnet ist, über welche der Bypass-Kanal (32) teilweise oder vollständig gesperrt und/oder freigegeben werden kann, wobei insbesondere über die Durchflusssteuereinrichtung (34) der freie Strömungsquerschnitt innerhalb des Bypass-Kanals (32) veränderbar ist.

9. Versorgungsaggregat (10) nach einem der vorstehenden Ansprüche, **dadurch gekennzeichnet, dass** die Abscheideeinrichtung einen Kornsammelkörper (28) aufweist, innerhalb welchem sich das aus der Einspeiseluftströmung abgeschiedene körnige Material (M) sammelt, wobei der Kornsammelkörper (28) eine oder mehrere Entlüftungsöffnungen für die Einspeiseluftströmung aufweist.

10. Versorgungsaggregat (10) nach Anspruch 9,
**dadurch gekennzeichnet, dass** der Kornsammelkörper (28) einen Füllbereich für das aus der Einspeiseluftströmung abgeschiedene körnige Material (M) aufweist, wobei der Füllbereich eine maximale Füllhöhe (F) definiert, wobei die Summe (S) aus der Hälfte der maximalen Füllhöhe (F) und dem aus dem Aggregatsgehäuse (12) herausragenden Teil des ersten Auslassströmungskanals (24a) des Strömungsteilers (20) kleiner ist als das Vierfache des Durchmessers (d1) des Einlassströmungskanals (22) des Strömungsteilers (20).

11. Versorgungssystem für zumindest zwei pneumatische Kornvereinzelungseinrichtungen (100) einer landwirtschaftlichen Sämaschine, mit
- einem ersten Versorgungsaggregat (10), welches dazu eingerichtet ist, einer ersten pneumatischen Kornvereinzelungseinrichtung (100) eine Versorgungsluftströmung und körniges Material (M) bereitzustellen; und
- einem zweiten Versorgungsaggregat, welches dazu eingerichtet ist, einer zweiten pneumatischen Kornvereinzelungseinrichtung eine Versorgungsluftströmung und körniges Material (M) bereitzustellen;
**dadurch gekennzeichnet, dass** das erste Versorgungsaggregat (10) nach einem der vorstehenden Ansprüche ausgebildet ist und der Strömungsteiler (20) des ersten Versorgungsaggregats (10) dazu eingerichtet ist, eine Einspeiseluftströmung dem Abscheidebereich (26) des ersten Versorgungsaggregats (10) zuzuleiten und eine andere Einspeiseluftströmung einem Abscheidebereich des zweiten Versorgungsaggregats zuzuleiten.

12. Versorgungssystem nach Anspruch 11,
**dadurch gekennzeichnet, dass** das zweite Versorgungsaggregat mit Ausnahme des Strömungsteilers (20) nach einem der Ansprüche 1 bis 12 ausgebildet ist.

13. Sämaschine, mit
- zumindest einem Versorgungssystem, welches dazu eingerichtet ist, zwei pneumatischen Kornvereinzelungseinrichtungen (100) jeweils eine Versorgungsluftströmung und körniges Material (M) bereitzustellen;
- zumindest zwei pneumatischen Kornvereinzelungseinrichtungen (100), welche jeweils mit einem Versorgungsaggregat (10) des Versorgungssystems verbunden und dazu eingerichtet sind, Körner aus dem von dem Versorgungssystem bereitgestellten körnigen Material (M) unter Verwendung einer mittels der von dem Versorgungssystem bereitgestellten Versorgungsluftströmung erzeugten Druckdifferenz zu vereinzeln; und
- zumindest zwei Säscharen zum Ablegen von vereinzelten Körnern auf einer landwirtschaftlichen Nutzfläche;
**dadurch gekennzeichnet, dass** das Versorgungssystem nach Anspruch 11 oder 12 ausgebildet ist.

## Claims

1. Supply assembly (10) for a pneumatic grain singulation device (100) of an agricultural seed drill, comprising
- an assembly housing (12) which has a separation region (26) into which a feed airflow loaded with granular material (M) can be introduced;
- a separation device arranged in the separation region (26) for separating the granular material (M) from the feed airflow,
- an introducing device (30) arranged in the assembly housing (12), via which device the feed airflow can be introduced, after the granular material (M) has been separated, into a supply airflow for the grain singulation device (100); and
- a through-channel (18) within the assembly housing (12), via which through-channel the supply airflow can be passed through the assembly housing (12);
**characterized by** a flow divider (20) which is configured to divide a transport airflow loaded with granular material (M) into two feed airflows and to direct one feed airflow to the separation region (26) of the assembly housing (12), the through-channel (18) being connected to a bypass channel (32) which connects a channel segment of the through-channel (18) arranged upstream of the introducing device (30) to a channel segment of the through-channel (18) arranged downstream of the introducing device (30).

2. Supply assembly (10) according to claim 1,
**characterized in that** the flow divider (20) is at least partially arranged outside the assembly housing (12) and/or is configured to divide the transport airflow loaded with granular material (M) into the two feed airflows outside the assembly housing (12).

3. Supply assembly (10) according to either claim 1 or claim 2,
**characterized in that** the flow divider (20) has an inlet flow channel (22) for the transport airflow, which channel splits at a branch point or branch region (36) into two outlet flow channels (24a, 24b) for the feed airflows, the inlet flow channel (22) and the two outlet flow channels (24a, 24b) preferably forming a Y-shaped basic form.

4. Supply assembly (10) according to claim 3,
**characterized in that** a first outlet flow channel (24a) projects into the separation region (26) of the assembly housing (12) and/or a second outlet flow channel (24b) leads away from the assembly housing (12) or out of the assembly housing (12), in particular the second outlet flow channel (24b) running substantially mirror-symmetrically to the inlet flow channel (22).

5. Supply assembly (10) according to claim 4,
**characterized in that** the first outlet flow channel (24a) has a channel length (L) which is less than twice the diameter (d1) of the inlet flow channel (22) or which substantially corresponds to the diameter (d1) of the inlet flow channel (22).

6. Supply assembly (10) according to either claim 4 or claim 5,
**characterized in that** the diameter (d1) of the inlet flow channel (22) is larger than the diameter (d2) of the first outlet flow channel (24a) and/or larger than the diameter (d3) of the second outlet flow channel (24b) or corresponds to the diameter (d2) of the first outlet flow channel (24a) and/or the diameter (d3) of the second outlet flow channel (24b).

7. Supply assembly (10) according to any of the preceding claims,
**characterized in that** the through-channel (18) comprises the introducing device (30) and has channel segments upstream and/or downstream of the introducing device (30), the diameters (D1, D2) of which segments are larger than the diameter (d1) of the inlet flow channel (22) of the flow divider (20).

8. Supply assembly (10) according to any of the preceding claims,
**characterized in that** a flow control device (34) is arranged within the bypass channel (32), by means of which the bypass channel (32) can be partially or completely blocked and/or opened, in particular the free flow cross-section within the bypass channel (32) being changeable via the flow control device (34).

9. Supply assembly (10) according to any of the preceding claims,
**characterized in that** the separation device has a grain collecting body (28) within which the granular material (M) separated from the feed airflow collects, the grain collecting body (28) having one or more vent openings for the feed airflow.

10. Supply assembly (10) according to claim 9,
**characterized in that** the grain collecting body (28) has a filling region for the granular material (M) separated from the feed airflow, the filling region defining a maximum filling height (F), the sum (S) of half the maximum filling height (F) and the part of the first outlet flow channel (24a) of the flow divider (20) projecting from the assembly housing (12) being less than four times the diameter (d1) of the inlet flow channel (22) of the flow divider (20).

11. Supply system for at least two pneumatic grain singulation devices (100) of an agricultural seed drill, comprising
- a first supply assembly (10) which is configured to provide a supply airflow and granular material (M) to a first pneumatic grain singulation device (100); and
- a second supply assembly which is configured to provide a supply airflow and granular material (M) to a second pneumatic grain singulation device;
**characterized in that** the first supply assembly (10) is designed according to any of the preceding claims and the flow divider (20) of the first supply assembly (10) is configured to direct a feed airflow to the separation region (26) of the first supply assembly (10) and to direct another feed airflow to a separation region of the second supply assembly.

12. Supply system according to claim 11,
**characterized in that** the second supply assembly, with the exception of the flow divider (20), is designed according to any of claims 1 to 12.

13. Seed drill comprising
- at least one supply system which is configured to provide a supply airflow and granular material (M) to each of two pneumatic grain singulation devices (100);
- at least two pneumatic grain singulation devices (100), each connected to a supply assembly (10) of the supply system and configured to singulate grains from the granular material (M) provided by the supply system using a pressure difference generated by the supply airflow provided by the supply system; and
- at least two seed coulters for depositing singulated grains on an agricultural area;
**characterized in that** the supply system is designed according to either claim 11 or claim 12.

## Revendications

1. Groupe d'alimentation (10) pour un dispositif de dispersion de grains (100) pneumatique d'un semoir agricole, comportant
- un boîtier de groupe (12) qui présente une zone de séparation (26) dans laquelle peut être introduit un écoulement d'air d'entrée chargé de matériau granulaire (M) ;
- un dispositif de séparation disposé dans la zone de séparation (26) pour la séparation du matériau granulaire (M) hors de l'écoulement d'air d'entrée,
- un dispositif d'introduction (30) disposé dans le boîtier de groupe (12) et par l'intermédiaire duquel l'écoulement d'air d'entrée peut être introduit, après la séparation du matériau granulaire (M), dans un écoulement d'air d'alimentation pour le dispositif de dispersion de grains (100) ; et
- un canal de passage (18) à l'intérieur du boîtier de groupe (12) et par l'intermédiaire duquel l'écoulement d'air d'alimentation peut passer à travers le boîtier de groupe (12) ;
**caractérisé par** un diviseur d'écoulement (20) qui est conçu pour diviser un écoulement d'air de transport chargé de matériau granulaire (M) en deux écoulements d'air d'entrée et pour diriger un écoulement d'air d'entrée vers la zone de séparation (26) du boîtier de groupe (12), dans lequel le canal de passage (18) est raccordé à un canal de dérivation (32) qui raccorde un segment de canal du canal de passage (18) disposé en amont du dispositif d'introduction (30) à un segment de canal du canal de passage (18) disposé en aval du dispositif d'introduction (30).

2. Groupe d'alimentation (10) selon la revendication 1,
**caractérisé en ce que** le diviseur d'écoulement (20) est disposé au moins partiellement à l'extérieur du boîtier de groupe (12) et/ou est conçu pour diviser l'écoulement d'air de transport chargé de matériau granulaire (M) à l'extérieur du boîtier de groupe (12) en les deux écoulements d'air d'entrée.

3. Groupe d'alimentation (10) selon la revendication 1 ou 2,
**caractérisé en ce que** le diviseur d'écoulement (20) présente un canal d'écoulement d'admission (22) pour l'écoulement d'air de transport, lequel se divise au niveau d'un point de bifurcation ou d'une zone de bifurcation (36) en deux canaux d'écoulement d'expulsion (24a, 24b) pour les écoulements d'air d'entrée, dans lequel le canal d'écoulement d'admission (22) et les deux canaux d'écoulement d'expulsion (24a, 24b) forment de préférence une forme de base en Y.

4. Groupe d'alimentation (10) selon la revendication 3,
**caractérisé en ce qu'**un premier canal d'écoulement d'expulsion (24a) pénètre dans la zone de séparation (26) du boîtier de groupe (12) et/ou un second canal d'écoulement d'expulsion (24b) s'éloigne du boîtier de groupe (12) ou sort du boîtier de groupe (12), dans lequel le second canal d'écoulement d'expulsion (24b) s'étend en particulier en symétrie sensiblement spéculaire par rapport au canal d'écoulement d'admission (22).

5. Groupe d'alimentation (10) selon la revendication 4,
**caractérisé en ce que** le premier canal d'écoulement d'expulsion (24a) présente une longueur de canal (L) qui est inférieure à deux fois le diamètre (d1) du canal d'écoulement d'admission (22) ou qui correspond sensiblement au diamètre (d1) du canal d'écoulement d'admission (22).

6. Groupe d'alimentation (10) selon la revendication 4 ou 5,
**caractérisé en ce que** le diamètre (d1) du canal d'écoulement d'admission (22) est supérieur au diamètre (d2) du premier canal d'écoulement d'expulsion (24a) et/ou est supérieur au diamètre (d3) du second canal d'écoulement d'expulsion (24b) ou correspond au diamètre (d2) du premier canal d'écoulement d'expulsion (24a) et/ou au diamètre (d3) du second canal d'écoulement d'expulsion (24b).

7. Groupe d'alimentation (10) selon l'une des revendications précédentes,
**caractérisé en ce que** le canal de passage (18) comprend le dispositif d'introduction (30) et présente, en amont et/ou en aval du dispositif d'introduction (30), des segments de canaux dont le diamètre (D1, D2) est supérieur au diamètre (d1) du canal d'écoulement d'admission (22) du diviseur d'écoulement (20).

8. Groupe d'alimentation (10) selon l'une des revendications précédentes,
**caractérisé en ce qu'**un dispositif de commande de débit (34) est disposé à l'intérieur du canal de dérivation (32) et par l'intermédiaire duquel le canal de dérivation (32) peut être partiellement ou complètement bloqué et/ou libéré, dans lequel la section transversale d'écoulement libre à l'intérieur du canal de dérivation (32) peut être modifiée en particulier par l'intermédiaire du dispositif de commande de débit (34).

9. Groupe d'alimentation (10) selon l'une des revendications précédentes,
**caractérisé en ce que** le dispositif de séparation présente un corps collecteur de grains (28) à l'intérieur duquel s'accumule le matériau granulaire (M) séparé de l'écoulement d'air d'entrée, dans lequel le corps collecteur de grains (28) présente une ou plusieurs ouvertures d'évacuation d'air pour l'écoulement d'air d'entrée.

10. Groupe d'alimentation (10) selon la revendication 9,
**caractérisé en ce que** le corps collecteur de grains (28) présente une zone de remplissage pour le matériau granulaire (M) séparé de l'écoulement d'air d'entrée, dans lequel la zone de remplissage définit une hauteur de remplissage maximale (F), dans lequel la somme (S) de la moitié de la hauteur de remplissage maximale (F) et de la partie du premier canal d'écoulement d'expulsion (24a) du diviseur d'écoulement (20) qui fait saillie hors du boîtier de groupe (12) est inférieure à quatre fois le diamètre (d1) du canal d'écoulement d'admission (22) du diviseur d'écoulement (20).

11. Système d'alimentation pour au moins deux dispositifs de dispersion de grains (100) pneumatiques d'un semoir agricole, comportant
- un premier groupe d'alimentation (10) conçu pour fournir un écoulement d'air d'alimentation et un matériau granulaire (M) à un premier dispositif de dispersion de grains (100) pneumatique ; et
- un second groupe d'alimentation conçu pour fournir un écoulement d'air d'alimentation et un matériau granulaire (M) à un second dispositif de dispersion de grains pneumatique ;
**caractérisé en ce que** le premier groupe d'alimentation (10) est réalisé selon l'une des revendications précédentes et le diviseur d'écoulement (20) du premier groupe d'alimentation (10) est conçu pour diriger un écoulement d'air d'entrée vers la zone de séparation (26) du premier groupe d'alimentation (10) et pour diriger un autre écoulement d'air d'entrée vers une zone de séparation du second groupe d'alimentation.

12. Système d'alimentation selon la revendication 11,
**caractérisé en ce que** le second groupe d'alimentation, à l'exception du diviseur d'écoulement (20), est réalisé selon l'une des revendications 1 à 12.

13. Semoir, comportant
- au moins un système d'alimentation qui est conçu pour fournir respectivement un écoulement d'air d'alimentation et un matériau granulaire (M) à deux dispositifs de dispersion de grains (100) pneumatiques ;
- au moins deux dispositifs de dispersion de grains (100) pneumatiques, lesquels sont respectivement raccordés à un groupe d'alimentation (10) du système d'alimentation et sont conçus pour disperser les grains hors du matériau granulaire (M) fourni par le système d'alimentation à l'aide d'une différence de pression générée au moyen de l'écoulement d'air d'alimentation fourni par le système d'alimentation ; et
- au moins deux socs de semoir permettant de déposer des grains dispersés sur une surface agricole utile ;
**caractérisé en ce que** le système d'alimentation est réalisé selon l'une des revendications 11 ou 12.
